# EUROPÄISCHE PATENTSCHRIFT

(11) **EP 1 057 712 B1**
(45) Veröffentlichungstag und Bekanntmachung des Hinweises auf die Patenterteilung: **30.11.2005**
(21) Anmeldenummer: 00110920.6
(22) Anmeldetag: 24.05.2000
(51) Int. Cl.: B62D 1/18, B62D 1/19

(54) **Kraftfahrzeuglenkung**
Vehicle steering apparatus
Direction de véhicule

(30) Priorität: 01.06.1999 DE 19925207
(43) Veröffentlichungstag der Anmeldung: 06.12.2000
(73) Patentinhaber: MAN Nutzfahrzeuge Aktiengesellschaft, 80976 München (DE)
(72) Erfinder: Albertshofer, Günter, Dipl.-Ing., 81927 München (DE)

(56) Entgegenhaltungen:
- DE-A- 3 544 345
- US-A- 5 507 521
- US-A- 5 871 233
- PATENT ABSTRACTS OF JAPAN vol. 017, no. 455 (M-1466), 20. August 1993 (1993-08-20) & JP 05 105014 A (HINO MOTORS LTD), 27. April 1993 (1993-04-27)

## Beschreibung

### Stand der Technik

Die Erfindung geht aus von einer Kraftfahrzeuglenkung, insbesondere von einer Nutzfahrzeuglenkung, gemäß der Gattung von Patentanspruch 1. Derartige Kraftfahrzeuglenkungen sind zum Beispiel aus der US 5 871 233 A oder aus der US 5 507 521 A bekannt. Eine solche Kraftfahrzeuglenkung enthält eine Lenksäule, welche ein meist mit einem Airbag versehenes Lenkrad trägt. Die Lenksäule ist an einer Stirnwand des Kraftfahrzeugaufbaues abgestützt und gegenüber dieser in einem bestimmten Winkel geneigt. Bei einem Frontalaufprall des Kraftfahrzeuges kommt es wegen der Verformung der Stirnwand und wegen der Beschleunigung des Lenksäulenoberteiles nach vorne zu einer Änderung der Lenksäulenneigung in Form einer Aufwärtsbewegung des Lenkrades. Eine ungünstige Position des Fahrers relativ zum aus dem Lenkrad austretenden Airbag ist die Folge. Das Resultat kann eine hohe Brustintrusion sein, da häufig nur der Kopf vom Airbag abgefangen wird und die Brust des Fahrers auf den unteren Lenkradkranz durchschlägt und nicht, wie geplant, durch den Airbag abgestützt wird.

Bei Nutzfahrzeugen ist die Lenksäule bereits im Ausgangszustand relativ steil angestellt, so daß der Winkel des Fahreroberkörpers relativ zum Lenkrad beim Aufschlag schon unter der Annahme einer durch den Frontalcrash unveränderten Neigung der Lenksäule ungünstig ist. In der Regel stellt sich die Lenksäule bei einem Frontalcrash aber noch weiter auf, so daß sich bei Nutzfahrzeugen das Problem einer besonders geringen Abstützung des Brustbereiches durch den Lenkrad-Airbag ergibt.

Aus der US 5871233 A ist eine Lenkvorrichtung für ein Fahrzeug bekannt, deren Lenkrad mit einem Airbag ausgestattet ist. Im Falle einer plötzlichen Abbremsung des Fahrzeugs bläst sich der Airbag auf und wird zusammen mit dem Lenkrad in Richtung auf den Fahrer zubewegt.

Eine ähnliche Lenkvorrichtung ist aus der US 5507521 A bekannt, bei welcher ein pyrotechnisches Stellorgan das Lenkrad bei plötzlicher Fahrzeugabbremsung in Richtung des Fahrers schwenkt.

Aus der DE 35 44 345 A1 ist eine Kraftfahrzeuglenkung bekannt, bei welcher die Lenksäule mittels eines durch einen Kollisionssensor freigebbaren Energiespeichers um eine Schwenkachse schwenkbar ist, um die unerwünschte Aufstellneigung des Lenkrades zu kompensieren.

Bei dem Energiespeicher gemäß der bekannten Schrift kann es sich um einen Zylinder-Kolbentrieb handeln, welcher über eine kraftübertragende Verbindung mit der Lenksäule verbunden ist und im Kollisionsfall durch Druckbeaufschlagung die Lenksäule in gewünschter Weise um die Schwenkachse schwenkt. Jedoch erscheint die Zeitdauer, die für die Druckbeaufschlagung des Zylinder-Kolbentriebes benötigt wird, gemessen an der schlagartig stattfindenden Oberkörperverlagerung des Fahrers zu lange, um eine rechtzeitige Neigungsverstellung der Lenksäule zu gewährleisten. Außerdem muß zur Versorgung des Zylinder-Kolbentriebes ständig Druckmittel in einem Behälter bevorratet werden, wobei durch bei mit der Zeit unvermeidbaren Leckverluste die Gefahr der Unwirksamkeit der Neigungsverstelllung besteht.

Gemäß einer Variante der bekannten Fahrzeuglenkung beinhaltet der Energiespeicher eine in Wirkverbindung mit der Lenksäule und unter Vorspannung stehende Feder, wobei im Kollisionsfall eine Arretierung der Lenksäule durch Sprengung gelöst und hierdurch die Feder ein Drehmoment auf die nun frei schwenkbare Lenksäule ausüben kann. Nachteilig ist hierbei, daß die Feder ständig unter Vorspannung steht, weshalb diese mit der Zeit nachläßt.

Darüber hinaus stehen der Zylinder-Kolbentrieb und die Feder mit der Lenksäule ständig in Wirkverbindung, wodurch eine fahrerbetätigte Lenksäulenverstellung im kollisionsfreien Betrieb behindert wird.

Der vorliegenden Erfindung liegt demgegenüber die Aufgabe zugrunde, eine Kraftfahrzeuglenkung der eingangs erwähnten Art zu schaffen, durch welche im Kollisionsfall eine Verschwenkung der Lenksäule auf den Fahrer zu mit der gebotenen hohen Geschwindigkeit erfolgt und zudem über einen längeren Zeitraum zuverlässig gewährleistet ist.

Erfindungsgemäß wird diese Aufgabe durch die kennzeichnenden Merkmale von Anspruch 1 gelöst.

### Vorteile der Erfindung

Die erfindungsgemäße Kraftfahrzeuglenkung hat den Vorteil, daß durch die schlagartige und zeitgleich mit der des Lenkrad-Airbags erfolgende Entfaltung des zusätzlichen Airbags die gewünschte Lenksäulenneigungsverstellung äußerst schnell erreicht wird. Somit sind ungünstige Winkellagen des Lenkrad-Airbags relativ zum Fahrer korrigierbar, noch bevor es zum Aufprallkontakt des Fahrers auf den Lenkrad-Airbag kommt.

Vorteilhaft ist außerdem, daß die durch Auslösung des zusätzlichen Airbags erzeugte Verschwenkung der Lenksäule auf den Fahrer zu unabhängig vom Verformungsgrad des Fahrzeugaufbaues erfolgt, so daß die insbesondere bei Nutzfahrzeugen bereits im kollisionsfreien Ausgangszustand ungünstige Winkellage der Lenksäule auch bei geringen Verformungen des Fahrzeugaufbaues korrigierbar ist.

Die Praxis hat gezeigt, daß die Auslösung von Airbags im Kollisionsfall äußerst zuverlässig erfolgt, geeignete Prüf- und Diagnosemethoden zur regelmäßigen Überprüfung der Airbag-Funktionen sind seit geraumer Zeit vorhanden. Da es sich bei einem solchen Airbag um ein handelsübliches Standardbauteil handelt und da wegen des Lenkrad-Airbags ein Airbag-Steuergerät ohnehin vorhanden ist, sind die Kosten für die erfindungsgemäße Kraftfahrzeuglenkung vergleichsweise gering. Insbesondere müssen keine zusätzlichen Energiespeicher vorgesehen werden, deren Energiepotential ständig erneuert werden muß.

Durch die in den Unteransprüchen aufgeführten Maßnahmen sind vorteilhafte Weiterbildungen und Verbesserungen der im Patentanspruch 1 angegebenen Kraftfahrzeuglenkung möglich.

Gemäß besonders zu bevorzugender Maßnahmen beinhaltet die Arretierung der Lenksäule gegenüber dem Fahrzeugaufbau einen fahrerbetätigbaren Verstellmechanismus zur Neigungs- und Axialverstellung der Lenksäule, wobei der zusätzliche Airbag im kollisionsfreien Betrieb nicht in Wirkverbindung mit der Lenksäule oder dem Verstellmechanismus steht und im Kollisionsfall gegen einen Anschlag der Lenksäule anschlagbar ist. Dies hat den Vorteil, daß der Verstellmechanismus der Lenksäule unbeeinflußt vom zusätzlichen Airbag fahrerbetätigt einstellbar bleibt, andererseits aber der Airbag bei Auslösung in jeder Verstellposition der Lenksäule, d. h. in jeder Relativlage zum Airbag, Kräfte auf die Lenksäule ausüben kann. Da der zusätzliche Airbag wegen der fehlenden Wirkverbindung einen Abstand zum Anschlag an der Lenksäule aufweist, hat seine Hülle beim Auftreffen auf den Anschlag eine bereits hohe Geschwindigkeit. Gegenüber einer Lösung, bei welcher die Airbag-Hülle direkt an die Lenksäule gekoppelt ist, bewirkt der hohe Anschlagimpuls ein besonders schnelles Lösen der Arretierung der Lenksäule.

Eine weitere, besonders zu bevorzugende Weiterbildung der Erfindung sieht vor, daß der zusätzliche Airbag ein üblicherweise als Seiten-Airbag verwendeter Airbag ist und durch ein Signal eines Airbag-Steuergerätes auslösbar ist, welches einem Beifahrer-Airbag zugedacht ist. Da für Nutzfahrzeuge in der Regel keine Beifahrer-Airbags verwendet werden, kann zur Ansteuerung des Seiten-Airbags der freie Kanal des Beifahrer-Airbags verwendet werden, weshalb übliche Pkw-Airbag-Steuer-geräte zum Einsatz kommen können.

### Zeichnungen

Nachstehend ist ein Ausführungsbeispiel der Erfindung in den Zeichnungen dargestellt und in der nachfolgenden Beschreibung näher erläutert. In den Zeichnungen zeigen :
- Fig. 1: eine Seitenansicht einer Nutzfahrzeuglenkung mit einem Lenkrad-Airbag und mit einem zusätzlichen Airbag zur Verstellung der Lenksäulenneigung, wobei sich die Airbags im unausgelösten Zustand befinden;
- Fig. 2: eine Seitenansicht der Nutzfahrzeuglenkung von Fig.1, wobei der Lenkrad-Airbag und der zusätzliche Airbag entfaltet sind.

### Beschreibung des Ausführungsbeispieles

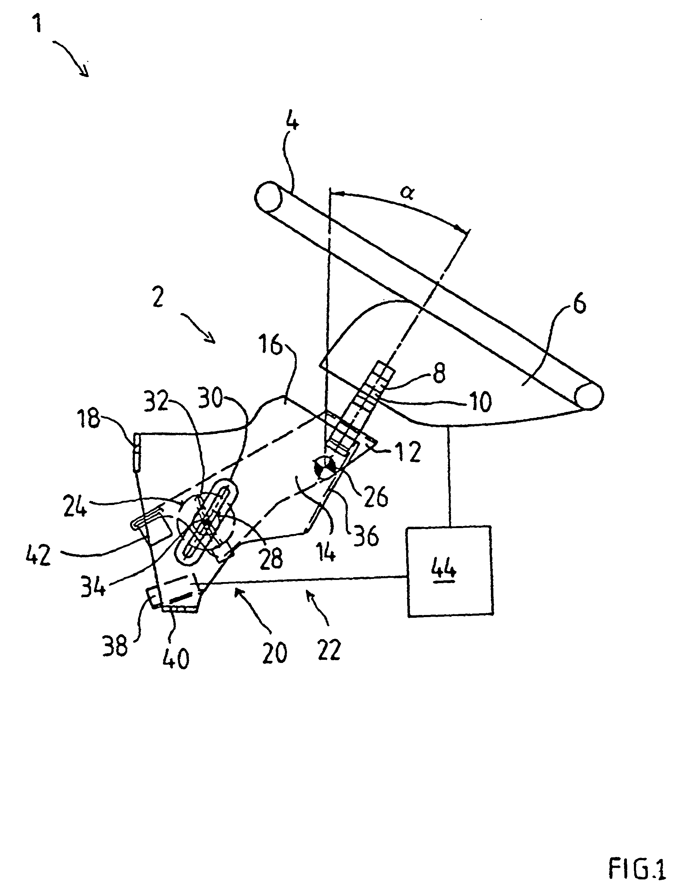

Die in Fig.1 insgesamt mit 1 bezeichnete Fahrzeuglenkung ist gemäß der bevorzugten Ausführungsform eine Nutzfahrzeuglenkung. Die Nutzfahrzeuglenkung 1 enthält ein am oberen Ende einer Lenksäule 2 angeordnetes Lenkrad 4 mit einem Lenkrad-Airbag 6, welcher gemäß dem in Fig.1 dargestellten kollisionsfreien Zustand des Nutzfahrzeugs nicht entfaltet ist.

Die Lenksäule 2 enthält einen oberen Lenksäulenteil 8 mit einem Mantelrohr 10, in welchem eine mit dem Lenkrad 4 verbundene Lenkspindel drehbar aufgenommen ist, die ihrerseits mit einem nicht dargestellten Lenkgetriebe in Verbindung steht. Im kollisionsfreien Zustand nimmt der obere Lenksäulenteil 8 eine Lenksäulenneigung α relativ zur Vertikalen ein, welche bei Nutzfahrzeugen relativ gering ist und sich hieraus ein ungünstiger Aufprallwinkel des Fahrers auf dem Lenkrad 4 ergibt.

Dem oberen Lenksäulenteil 8 schließt sich ein unterer, gegenüber dem oberen Lenksäulenteil 8 stumpfwinklig vorgezogener Lenksäulenteil an, der als U-förmiges, nach unten offenes Verschiebeblech 12 ausgebildet ist. Die beiden Schenkel 14 des U-förmigen Verschiebebleches 12 sind von zwei Wangen 16 eines am Fahrzeugaufbau befestigten Lenksäulenbockes 18 umgriffen und innerhalb der Wangen 16 mittels einer Kulissenführung 20 verschieb- und schwenkbar geführt, wobei wegen der Seitenansicht gemäß Fig.1 nur jeweils ein Schenkel 14 und eine Wange 16 zu sehen sind.

Die Kulissenführung 20 bildet einen Teil eines fahrerbetätigbaren Verstellmechanismus 22 der Lenksäule 2, welcher darüber hinaus eine in Fig.1 im Bereich der Kulissenführung 20 durch eine gestrichelte Kreislinie dargestellte Pneumatikzylinder-Kolben-Einheit 24 sowie eine Schwenkachse 26 aufweist. Die Pneumatikzylinder-Kolben-Einheit 24 ist am Lenksäulenbock 18 parallel zur Schwenkachse 26 zwischen den beiden Schenkeln 14 des den unteren Lenksäulenteil bildenden U-förmigen Verschiebebleches 12 aufgenommen, wobei an den freien Enden ihres Kolbens und Zylinders Klemmbacken 28 ausgebildet sind, welche in Fig.1 ebenfalls durch jeweils einen gestrichelten Kreisbogen angedeutet sind.

Die Pneumatikzylinder-Kolben-Einheit 24 ist fahrerbetätigt druckbeaufschlag- und druckentlastbar, wobei bei Druckbeaufschlagung durch die sich dann nach innen bewegenden Klemmbacken 28 die Schenkel 14 des U-fömigen Verschiebebleches 12 zur Aufhebung eines vorhandenen Reibschlusses von innen die Wangen 16 des Lenksäulenbockes 18 entspannen und somit eine Verschiebung und Verschwenkung der Lenksäule 2 gegenüber dem stationären Lenksäulenbock 18 im Rahmen des durch die Kulissenführung 20 gegebenen Spielraumes ermöglicht ist.

Die Kulissenführung 20 umfaßt einerseits als gerade Ausschnitte in den Wangen 16 des Lenksäulenbockes 18 ausgebildete und sich parallel zum oberen Lenksäulenteil 8 erstreckende Verschiebekulissen 30 und andererseits als Kreisbogenausschnitte in den Schenkeln 14 des U-förmigen Verschiebebleches 12 ausgebildete und sich in Umfangsrichtung einer gedachten Kreisbahn um die Schwenkachse 26 erstreckende Schwenkkulissen 32, wobei sich die Verschiebekulissen 30 und die Schwenkkulissen 32 beidseits paarweise kreuzend überdecken und mittels von den Klemmbacken 28 der Pneumatikzylinder-Kolben-Einheit 24 achsmittig nach außen wegragenden Achsstummeln 34 gegeneinander geführt sind.

Die Schwenkachse besteht aus einer mit dem oberen Ende des U-förmigen Verschiebebleches 12 in Verbindung stehenden und quer zu diesem verlaufenden Rolle 26, deren Enden in Führungsschienen 36 in den Wangen 16 des Lenksäulenbockes 18 beidseitig geführt sind. Um eine gleichsinnige Verstellung zu ermöglichen, sind die Führungsschienen 36 parallel zur Längserstreckung der Verschiebekulissen 30 angeordnet.

Bei Druckbelastung der Pneumatikzylinder-Kolben-Einheit 24 kann somit die Lenksäule 2 relativ zum Lenksäulenbock 18 längs der Verschiebekulissen 30 axial und zugleich um die Schwenkachse 26 in ihrer Neigung verstellt werden, wobei sie über die in den Führungsschienen 36 des Lenksäulenbockes 18 gehaltene Schwenkachse 26 abgestützt ist und die Schwenkbewegung durch die Schwenkkulissen 32 geführt wird. Die eingestellte Lage der Lenksäule 2 ist dann durch den mit der fahrerbetätigten Druckentlastung und über Federspeicher der Pneumatik-Zylinder-Kolben-Einheit 24 erzeugten Reibschluß zwischen den Schenkeln 14 des unteren Lenksäulenteiles 12 und den Wangen 16 des Lenksäulenbockes 18 fixierbar.

Ein erfindungsgemäß als zusätzlicher Airbag 38 vorgesehenes und ausgebildetes Stellelement zum schlagartigen Verstellen der Neigung der Lenksäule 2 während einer Frontalkollision ist an einer unteren Strebe 40 des Lenksäulenbockes 18 befestigt und liegt im unausgelösten Zustand einem Gurtband 42 mit Abstand gegenüber, das am unteren Ende des unteren Lenksäulenteiles 12 angeordnet ist und dessen beide Schenkel 14 mit leichtem Durchhang miteinander verbindet. Hierzu sind in den Schenkeln 14 Laschen vorgesehen, durch welche die Enden des Gurtbandes 42 geführt sind. Durch die Beabstandung vom Gurtband 42 steht der zusätzliche Airbag 38 im kollisionsfreien Betrieb nicht in Wirkverbindung mit der Lenksäule 2, weshalb diese unbeeinflußt vom zusätzlichen Airbag 38 fahrerbetätigt einstellbar bleibt.

Der zusätzliche Airbag 38 ist gemäß der bevorzugten Ausführungsform ein üblicherweise als Seiten-Airbag verwendeter Airbag und durch ein Signal des Kanals eines Airbag-Steuergerätes 44 auslösbar, welcher bei einem Pkw einem Beifahrer-Airbag zugeordnet wäre. Da für Nutzfahrzeuge aber keine Beifahrer-Airbags vorgesehen sind, kann der zusätzliche Airbag 38 den freien Kanal des Beifahrer-Airbags belegen.

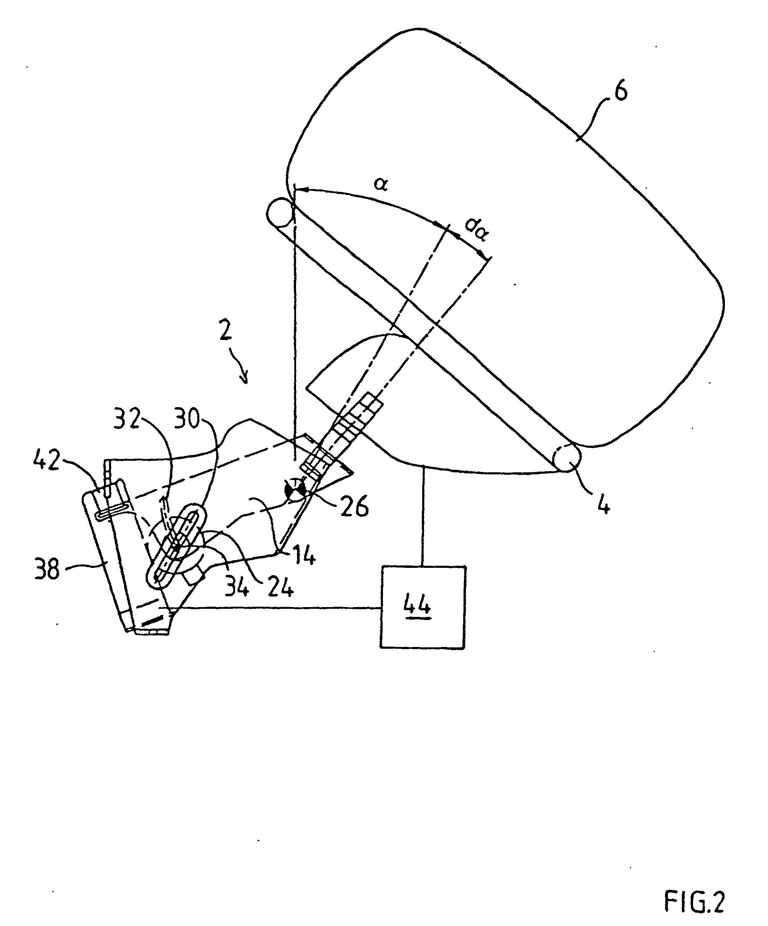

Bei einer Frontalkollision des Nutzfahrzeuges mit einem Hindernis ergibt sich die in Fig. 2 därgestellte Situation, bei der abhängig vom Signal eines Kollisionssensors je ein Auslösesignal für den zusätzlichen Airbag 38 und für den Lenkrad-Airbag 6 vom Airbag-Steuergerät 44 zeitgleich ausgesteuert werden, so daß sich beide Airbags 6, 38 zur selben Zeit entfalten. Der zusätzliche Airbag 38 entfaltet sich in Richtung auf das Gurtband 42 zu und schlägt an diesem an, welches sich daraufhin nach oben ausweichend wegen seines leichten Durchhanges an ihn anschmiegen kann und den Anschlagimpuls auf die Lenksäule 2 überträgt, wodurch wegen des zwischen dem Gurtband 42 und der Schwenkachse 26 gebildeten Hebelarmes ein Drehmoment auf die Lenksäule 2 um die Schwenkachse 26 erzeugt wird. Da der zusätzliche Airbag 38 und die Schwenkachse 26 an verschiedenen Enden des unteren Lenksäulenteiles 12 angeordnet sind, ergibt sich eine relativ große Hebelarmlänge, was sich günstig auf das erzeugte Schwenkmoment auswirkt.

Gemäß der bevorzugten Ausführungsform wird die Pneumatik-Zylinder-Kolben-Einheit 24 vom Airbag-Steuergerät 44 zeitgleich mit der Auslösung der beiden Airbags 6, 38 mit Druck beaufschlagt, wodurch die Arretierung der Lenksäule 2 in Form des Reibschlusses zwischen ihr und dem Lenksäulenbock 18 gelöst wird. Hierdurch wird eine ungehinderte Schwenkbewegung der Lenksäule 2 ausgehend von ihrer ursprünglichen Winkellage um einen Winkel dα in Richtung auf den Fahrer erzielt. Alternativ könnte der Anschlagimpuls des zusätzlichen Airbags 38 gegen das Gurtband 42 so groß sein, so daß der Reibschluß zwischen der Lenksäule 2 und dem Lenksäulenbock 18 auch ohne Lösen der Reibverbindung überwunden werden kann.

Wie aus Fig. 2 anschaulich hervorgeht, verschwenkt die Lenksäule durch den Impuls des zusätzlichen Airbags 38 im Uhrzeigersinn so weit, bis die unteren Enden der in den Schenkeln 14 des unteren Lenksäulenteiles 12 ausgebildeten Schwenkkulissen 32 an den Achsstummeln 34 der stationären Pneumatikzylinder-Kolben-Einheit 24 anschlagen. Die für die Größe des Schwenkwinkels dα maßgeblichen Parameter, wie z. B. die Bogenlänge der Schwenkkulissen 32, das Volumen des entfalteten zusätzlichen Airbags 38, dessen Abstand vom Gurtband 42, die Länge des Hebelarmes zwischen Gurtband 42 und Schwenkachse 26 usw. sind so zu bemessen bzw. so aufeinander abzustimmen, daß die durch Entfaltung des zusätzlichen Airbags 38 erzielte Verschwenkung der Lenksäule 2 um den Winkel dα zum einen die im kollisionsfreien Betrieb vorhandene ursprüngliche Lenksäulenneigung α relativ zur Vertikalen vergrößert, um eine Lenkradposition ähnlich der beim Pkw zu erhalten, und darüber hinaus eine durch die Frontalkollision eventuell hervorgerufene Verkleinerung der ursprünglichen Lenksäulenneigung α (Aufstellneigung der Lenksäule) kompensiert.

## Patentansprüche

1. Kraftfahrzeuglenkung (1), insbesondere Nutzfahrzeuglenkung, mit einer ein Lenkrad (4) mit einem Lenkrad-Airbag (6) tragenden Lenksäule (2), wobei die Lenksäule (2) an einem Fahrzeugaufbau (18) abgestützt und diesem gegenüber nach Überwinden oder Lösen einer Arretierung (22) mittels eines im Kollisionsfall aktivierten Stellelementes (38) um eine im wesentlichen quer zur Fahrzeuglängsachse verlaufende horizontale Schwenkachse (26) in Richtung auf den Fahrer zuschwenkbar ist, **dadurch gekennzeichnet, dass** das Stellelement durch einen zusätzlichen, am Fahrzeugaufbau (18) abgestützten Airbag (38) gebildet wird, welcher im Kollisionsfall zeitgleich mit dem Lenkrad-Airbag (6) auslösbar und durch welchen im entfalteten Zustand ein Drehmoment auf die Lenksäule (2) um die Schwenkachse (26) derart erzeugbar ist, sodass die Lenksäule (2) in Richtung auf den Fahrer zuschwenkbar ist.

2. Kraftfahrzeuglenkung nach Anspruch 1, **dadurch gekennzeichnet, daß** die Arretierung einen fahrerbetätigbaren Verstellmechanismus (22) zur Neigungs- und Axialverstellung der Lenksäule (2) beinhaltet.

3. Kraftfahrzeuglenkung nach Anspruch 2, **dadurch gekennzeichnet, daß** der zusätzliche Airbag (38) im kollisionsfreien Betrieb nicht in Wirkverbindung mit der Lenksäule (2) oder dem Verstellmechanismus (22) steht und im Kollisionsfall gegen einen Anschlag (42) der Lenksäule (2) anschlagbar ist.

4. Kraftfahrzeuglenkung nach Anspruch 3, **dadurch gekennzeichnet, daß** der fahrerbetätigbare Verstellmechanismus (22) eine Kulissenführung (20) beinhaltet, durch welche die Schenkel (14) eines unteren, als U-förmiges Verschiebeblech ausgebildeten Lenksäulenteiles (12) innerhalb von Wangen (16) eines am Fahrzeugaufbau befestigten Lenksäulenbockes (18) verschieb- und schwenkbar geführt sind.

5. Kraftfahrzeuglenkung nach Anspruch 4, **dadurch gekennzeichnet, daß** die Kulissenführung (20) einerseits als gerade Ausschnitte in den Wangen (16) des Lenksäulenbockes (18) ausgebildete und parallel zur Lenksäulenlängsrichtung verlaufende Verschiebekulissen (30) und andererseits als Kreisbogenausschnitte in den Schenkeln (14) des U-förmigen Verschiebebleches (12) ausgebildete Schwenkkulissen (32) umfaßt, wobei die Verschiebekulissen (30) und die Schwenkkulissen (32) sich beidseits paarweise kreuzend überdecken und durch sie hindurchragende Achsen (34) gegeneinander geführt sind.

6. Kraftfahrzeuglenkung nach Anspruch 5, **dadurch gekennzeichnet, daß** die Schwenkachse vom fahrerbetätigbaren Verstellmechanismus (22) umfaßt ist und eine Rolle (26) beinhaltet, welche mit dem oberen Ende des U-förmigen Verschiebebleches (12) in Verbindung stehend quer zu diesem verläuft und deren Enden in Führungsschienen (36) in den Wangen (16) des Lenksäulenbockes (18) beidseitig geführt sind, welche parallel zur Längserstreckung der Verschiebekulissen (30) angeordnet sind.

7. Kraftfahrzeuglenkung nach Anspruch 6, **dadurch gekennzeichnet, daß** der Anschlag der Lenksäule (2) für den zusätzlichen Airbag (38) als ein die Enden der Schenkel (14) des U-förmigen Verschiebebleches (12) verbindendes Gurtband (42) ausgebildet ist, welches dem zusätzlichen Airbag (38) mit Abstand gegenüberliegt.

8. Kraftfahrzeuglenkung nach Anspruch 7, **dadurch gekennzeichnet, daß** der fahrerbetätigbare Verstellmechanismus (22) eine Zylinder-Kolben-Einheit aufweist, vorzugsweise eine druckluftbetätigbare Pneumatikzylinder-Kolben-Einheit (24), durch welche bei fahrerbetätigter Druckbeaufschlagung ein vorhanderer Reibschluß zwischen der Lenksäule (2) und dem Lenksäulenbock (18) aufhebbar und eine Verschiebung und Drehung der Lenksäule (2) gegenüber dem Lenksäulenbock (18) ermöglichbar ist.

9. Kraftfahrzeuglenkung nach Anspruch 8, **dadurch gekennzeichnet, daß** mittels der druckluftbetätigbaren Pneumatikzylinder-Kolben-Einheit (24) die Schenkel (14) des U-fömigen Verschiebebleches (12) zur Erzeugung des Reibschlusses von innen gegen die Wangen (16) des Lenksäulenbockes (18) spannbar sind.

10. Kraftfahrzeuglenkung nach Anspruch 9, **dadurch gekennzeichnet, daß** die Pneumatik-Zylinder-Kolben-Einheit (24) zeitgleich mit der Auslösung des zusätzlichen Airbags (38) druckbeaufschlagbar und hierdurch der Reibschluß zwischen der Lenksäule (2) und dem Lenksäulenbock (18) schlagartig lösbar ist.

11. Kraftfahrzeuglenkung nach einem der vorhergehenden Ansprüche, **dadurch gekennzeichnet, daß** der zusätzliche Airbag (38) ein üblicherweise als Seiten-Airbag verwendeter Airbag ist und durch ein Signal eines Airbag-Steuergerätes (44) auslösbar ist, welches einem Beifahrer-Airbag zugedacht ist.

## Claims

1. Motor-vehicle steering system (1), particularly a commercial-vehicle steering system, with a steering column (2) carrying a steering wheel (4) with a steering-wheel airbag (6), whereby the steering column (2) is supported on a vehicle superstructure (18) and can, relative to said superstructure (18), be slewed in the direction of the driver about a horizontal slewing axis (26) extending basically in transverse direction relative to the vehicle longitudinal axis, said slewing action being effected by means of an actuator (38) activated in the event of a collision after a locking mechanism (22) has been overcome or released, **characterised in that** the actuator is formed by an additional airbag (38) which is supported on the vehicle superstructure (18), can be released simultaneously with the steering-wheel airbag (6) in a collision and, when deployed, can generate a torque on the steering colum (2) about the slewing axis (26) so that the steering column (2) can be slewed in the direction of the driver.

2. Motor-vehicle steering system according to Claim 1, **characterised in that** the locking mechanism includes an adjusting mechanism (22) for the inclination and axial adjustment of the steering column (2), whereby said adjusting mechanism (22) can be actuated by the driver.

3. Motor-vehicle steering system according to Claim 2, **characterised in that** in collision-free operation the additional airbag (38) is not in a working connection with the steering column (2) or with the adjusting mechanism (22) and, in the event of a collision, can be brought into contact with a stop (42) on the steering column (2).

4. Motor-vehicle steering system according to Claim 3, **characterised in that** the adjusting mechanism (22), which can be actuated by the driver, contains a sliding-block guide (20), by means of which the legs (14) of a lower steering-column part (12) designed as a U-shaped sliding plate can be guided in a sliding and slewing manner within the webs (16) of a steering-column bracket (18) fastened to the vehicle superstructure.

5. Motor-vehicle steering system according to Claim 4, **characterised in that** the sliding-block guide (20) comprises sliding gates (30) designed as straight cut-outs in the webs (16) of the steering-column bracket (18) and running parallel to the longitudinal direction of the steering column on the one hand and slewing gates (32) designed as arc-shaped cut-outs in the legs (14) of the U-shaped sliding plate (12) on the other, whereby the sliding gates (30) and the slewing gates (32) cross and overlap each other in pairs on both sides and are located against each other by shafts (34) extending through them.

6. Motor-vehicle steering system according to Claim 5, **characterised in that** the slewing shaft is encompassed by the adjusting mechanism (22), which can be actuated by the driver, and includes a roller (26) which is connected with the upper end of the U-shaped sliding plate (12) and extends in transverse direction relative to said plate (12) and whose ends are each guided on both sides in guide rails (36) in the webs (16) of the steering-column bracket (18), which guide rails (36) are arranged parallel to the longitudinal extension of the sliding gates (30).

7. Motor-vehicle steering system according to Claim 6, **characterised in that** the stop of the steering column (2) for the additional airbag (38) is designed as a belt (42) connecting the ends of the legs (14) of the U-shaped sliding plate (12) and placed at a distance opposite the additional airbag (38).

8. Motor-vehicle steering system according to Claim 7, **characterised in that** the adjusting mechanism (22), which can be actuated by the driver, has a cylinderpiston unit, preferably a compressed-air-actuated pneumatic-cylinder piston unit (24), by means of which, in the event of driver-initiated admission of pressure, an existing frictional engagement between the steering column (2) and the steering-column bracket (18) can be cancelled and the steering column (2) can be slid and turned relative to the steering-column bracket (18).

9. Motor-vehicle steering system according to Claim 8, **characterised in that** for effecting the frictional engagement the legs (14) of the U-shaped sliding plate (12) can be tensioned from within against the webs (16) of the steering-column bracket (18) by means of the pneumatic cylinder/piston unit (24) which can be actuated by compressed air.

10. Motor-vehicle steering system according to Claim 9, **characterised in that** simultaneously with the triggering of the additional airbag (38) the pneumatic cylinder/piston unit (24) can be charged with compressed air and that, consequently, the frictional engagement between the steering column (2) and the steering-column bracket (18) can be cancelled instantaneously.

11. Motor-vehicle steering system according to one of the foregoing Claims, **characterised in that** the additional airbag (38) is an airbag usually used as side airbag and can be released by a signal from an airbag control unit (44) allocated to a co-driver airbag.

## Revendications

1. Direction d'un véhicule à moteur (1), en particulier direction d'un véhicule industriel, composée d'une colonne de direction (2) supportant un volant (4) avec un airbag (6), auquel cas la colonne de direction (2) repose sur une carrosserie de véhicule (18) et est, par rapport à celle-ci, pivotable dans la direction du chauffeur autour d'un axe de pivotement (26) horizontal passant pour l'essentiel transversalement par rapport à l'axe longitudinal du véhicule après déverrouillage ou desserrage d'un dispositif de blocage (22) au moyen d'un élément de réglage activé (38) en cas de collision, **caractérisée en ce que** l'élément de réglage est formé d'un airbag (38) supplémentaire reposant sur la carrosserie du véhicule (18), et cet airbag peut se déclencher en cas de collision en même temps que l'airbag du volant (6) et peut permettre de produire un couple sur la colonne de direction (2) autour de l'axe de pivotement (26) en état déployé de telle manière que la colonne de direction puisse être pivotable en direction du chauffeur.

2. Direction d'un véhicule à moteur selon la revendication 1, **caractérisée en ce que** le dispositif de blocage contient un mécanisme de réglage (22) actionnable par le chauffeur pour régler la colonne de direction (2) en hauteur et en inclinaison.

3. Direction d'un véhicule à moteur selon la revendication 2, **caractérisée en ce que** l'airbag (38) supplémentaire n'est pas en liaison active avec la colonne de direction (2) ou avec le mécanisme de réglage en fonctionnement normal et peut être déclenché contre une butée (42) de la colonne de direction (2) en cas de collision.

4. Direction d'un véhicule à moteur selon la revendication 3, **caractérisée en ce que** le mécanisme de réglage (22) actionnable par le chauffeur comporte un guidage à coulisse (20) par lequel le montant (14) d'une pièce (12) inférieure de la colonne de direction formée d'une tôle de déplacement en forme de U est guidé de manière déplaçable et pivotable à l'intérieur de jumelles (16) d'un support de colonne de direction (18) fixé à la carrosserie du véhicule.

5. Direction d'un véhicule à moteur selon la revendication 4, **caractérisée en ce que** le guidage à coulisse (20) comprend, d'une part, des coulisses de déplacement (30) formées comme découpes droites dans les jumelles (16) du support de colonne de direction (18) des coulisses de déplacement (30) se déplaçant parallèlement par rapport au sens longitudinal de la colonne de direction et, d'autre part, des coulisses de pivotement formées comme découpe en arc de cercle dans les montants (14) de la tôle de déplacement en U (12), auquel cas les coulisses de déplacement (30) et les coulisses de pivotement (32) se chevauchent par croisement de chaque côté par paire et sont guidées les unes par rapport aux autres par des axes (34) passant par eux.

6. Direction d'un véhicule à moteur selon la revendication 5, **caractérisée en ce que** l'axe de pivotement est entouré par le mécanisme de réglage (22) actionnable par le chauffeur et comporte un rouleau qui se déplace avec l'extrémité supérieure de la tôle de déplacement (12) en U transversalement par rapport à celle-ci de manière liée et ses extrémités sont guidées de chaque côté dans des rails de guidage (36) dans les jumelles (16) du support de colonne de direction (18), lesquelles sont disposées parallèlement à l'extension longitudinale des coulisses de déplacement (30).

7. Direction d'un véhicule à moteur selon la revendication 6, **caractérisée en ce que** la butée de la colonne de direction (2) utilisée pour l'airbag supplémentaire (38) est formée comme sangle (42) reliant les extrémités des montants (14) de la tôle de déplacement en U (12), cette sangle étant située à une certaine distance du côté opposé par rapport à l'airbag supplémentaire (38).

8. Direction d'un véhicule à moteur selon la revendication 7, **caractérisée en ce que** le mécanisme de réglage actionnable par le chauffeur (22) présente une unité cylindre/piston, de préférence une unité cylindre pneumatique/piston actionnable par air comprimé (24) permettant de supprimer la friction entre la colonne de direction (2) et le support de colonne de direction (18) en cas d'alimentation en pression activée par le chauffeur et d'assurer un déplacement et une rotation de la colonne de direction (2) par rapport au support de colonne de direction (18).

9. Direction d'un véhicule à moteur selon la revendication 8, **caractérisée en ce que** les jumelles (14) de la tôle de déplacement en U (12) peuvent être bloquée de l'intérieur contre les montants (16) du support de colonne de direction (18) par production de la friction au moyen de l'unité cylindre pneumatique/piston actionnable par air comprimé.

10. Direction d'un véhicule à moteur selon la revendication 9, **caractérisée en ce que** l'unité cylindre pneumatique/piston (24) peut être alimentée en même temps que le déclenchement de l'airbag supplémentaire (38) et, de ce fait, la friction entre la colonne de direction (2) et le support de colonne de direction (18) peut être débloquée subitement.

11. Direction d'un véhicule à moteur selon l'une des revendications mentionnées précédemment, **caractérisée en ce que** l'airbag supplémentaire (38) est un airbag employé habituellement comme airbag latéral et peut se déclencher par un signal envoyé par un appareil de commande d'airbag (44) destiné à un airbag passager.
